# EUROPÄISCHE PATENTSCHRIFT

(11) **EP 4 100 217 B1**
(45) Veröffentlichungstag und Bekanntmachung des Hinweises auf die Patenterteilung: **23.08.2023**
(21) Anmeldenummer: 21701815.9
(22) Anmeldetag: 01.02.2021
(51) Int. Cl.: B25J 11/00, B25D 17/08, B25J 15/04, B23B 31/20, B23B 31/24, B23Q 3/155, B23B 39/14, B66B 7/00, B23Q 3/157, B28D 1/14, B66B 19/00

(54) **MONTAGEVORRICHTUNG ZUR DURCHFÜHRUNG VON MONTAGESCHRITTEN AN EINER WAND UND VERFAHREN ZUM WECHSELN EINES WERKZEUGS EINES MONTAGEGERÄTS**
ASSEMBLY DEVICE FOR CARRYING OUT ASSEMBLY STEPS ON A WALL AND METHOD FOR CHANGING A TOOL OF AN ASSEMBLY DEVICE
APPAREIL DE MONTAGE PERMETTANT D'EFFECTUER DES ÉTAPES DE MONTAGE SUR UN MUR ET PROCÉDÉ DE REMPLACEMENT D'UN OUTIL D'UN APPAREIL DE MONTAGE

(30) Priorität: 07.02.2020 EP 20156037
(43) Veröffentlichungstag der Anmeldung: 14.12.2022
(73) Patentinhaber: INVENTIO AG, 6052 Hergiswil (CH)
(72) Erfinder: CAMBRUZZI, Andrea, 8057 Zürich (CH); PASSONI, Luciano, 41051 Castelnuovo Rangone (IT); SIMMONDS, Oliver, 6004 Luzern (CH); ZIMMERLI, Philipp, 4624 Härkingen (CH)
(74) Vertreter: Inventio AG
(86) Internationale Anmeldenummer: PCT/EP2021/052239
(87) Internationale Veröffentlichungsnummer: WO 2021/156167

(56) Entgegenhaltungen:
- WO-A1-2017/016780
- WO-A1-2020/025288
- DE-A1- 3 634 018
- US-A- 4 784 421
- US-A1- 2018 326 507

## Beschreibung

Die Erfindung betrifft eine Montagevorrichtung zur Durchführung von Montageschritten an einer Wand mit den Merkmalen des Anspruchs 1 und ein Verfahren zum Wechseln eines von einem Montagegerät einer Montagevorrichtung zur Durchführung von Montageschritten an einer Wand aufgenommenen Werkzeugs gemäss Anspruch 8.

Die US 4,819,320 beschreibt eine Montagevorrichtung mit einem Montagegerät in Form einer Bohrmaschine. Die Bohrmaschine weist eine Antriebseinheit und einen Werkzeughalter auf, der ein Werkzeug in Form eines Bohrers aufnehmen und fixieren kann. Der Werkzeughalter kann einen Verriegelungszustand und einen Entriegelungszustand einnehmen, wobei ein vom Werkzeughalter aufgenommenes Werkzeug im Entriegelungszustand aus dem Werkzeughalter entfernbar und im Verriegelungszustand im Werkzeughalter fixiert ist. Die Montagevorrichtung verfügt über eine mechatronische Installationskomponente in Form eines Roboters, der die Bohrmaschine aufnehmen und verlagern kann, sowie mit der Bohrmaschine Löcher bohren kann. Die Montagevorrichtung weist ausserdem eine Wechsel-Vorrichtung zum automatisierten Wechseln des Bohrers der Bohrmaschine auf. Zum Entfernen eines Bohrers aus der Bohrmaschine muss die Bohrmaschine in eine an den Werkzeughalter angepasste Ausnehmung der Wechsel-Vorrichtung gedrückt und damit der Werkzeughalter in den Entriegelungszustand gebracht werden. In diesem Zustand kann der Bohrer entfernt und anschliessend ein neuer Bohrer eingesetzt werden.

Zum Entfernen des Bohrers muss die Bohrmaschine damit zwingend in eine vorgegebene Position gegenüber der Wechsel-Vorrichtung gebracht werden. Wenn sich ein Bohrer während des Bohrens eines Lochs im Bohrloch verklemmt und nicht mehr aus dem Bohrloch entfernt werden kann, kann die Bohrmaschine vom Roboter nicht mehr zur Wechsel-Vorrichtung verlagert werden. Damit ist in diesem Fall ein automatischer Wechsel des Bohrers nicht mehr möglich, so dass ein manuelles Eingreifen eines Monteurs notwendig ist.

Demgegenüber ist es insbesondere die Aufgabe der Erfindung, eine Montagevorrichtung zur Durchführung von Montageschritten an einer Wand und ein Verfahren zum Wechseln eines von einem Montagegerät einer Montagevorrichtung zur Durchführung von Montageschritten an einer Wand aufgenommenen Werkzeugs vorzuschlagen, welche in möglichst vielen Situationen einen automatisierten Wechsel des Werkzeugs ermöglichen und damit ein manuelles Eingreifen eines Monteurs möglichst selten notwendig machen. Erfindungsgemäss wird diese Aufgabe mit einer Montagevorrichtung mit den Merkmalen des Anspruchs 1 und einem Verfahren mit den Merkmalen des Anspruchs 8 gelöst.

Die erfindungsgemässe Montagevorrichtung zur Durchführung von Montageschritten an einer Wand verfügt über ein Montagegerät zur Durchführung von Montageschritten an einer Wand. Das Montagegerät verfügt eine Antriebseinheit und einen Werkzeughalter. Der Werkzeughalter ist an die Antriebseinheit gekoppelt und ist dazu vorgesehen, ein sich in einer Werkzeugrichtung vom Werkzeughalter weg erstreckendes und von der Antriebseinheit antreibbares Werkzeug aufzunehmen. Er kann einen Verriegelungszustand und einen Entriegelungszustand einnehmen, wobei ein vom Werkzeughalter aufgenommenes Werkzeug im Entriegelungszustand aus dem Werkzeughalter entfernbar und im Verriegelungszustand im Werkzeughalter fixiert und damit nicht entfernbar ist. Erfindungsgemäss verfügt das Montagegerät über eine Entriegelungsvorrichtung mit einem ansteuerbaren Aktor, welche so ausgeführt und angeordnet ist, dass mittels des Aktors der Werkzeughalter vom Verriegelungszustand in den Entriegelungszustand bringbar und damit das Werkzeug freigebbar ist.

Die Montagevorrichtung weist ausserdem einen mobilen Montagerahmen, eine mechatronischen Installationskomponente und einen ansteuerbaren Greifer zum Fixieren eines Werkzeugs auf. Die mechatronische Installationskomponente und der Greifer sind dabei am Montagerahmen angeordnet. Das Montagegerät ist von der mechatronischen Installationskomponente aufnehmbar und verlagerbar. Die Montagevorrichtung kann insbesondere für das Durchführen von Montageschritten in einem Schacht, insbesondere einem Aufzugschacht vorgesehen sein.

Das Vorsehen einer Entriegelungsvorrichtung am Montagegerät ermöglicht durch eine entsprechende Ansteuerung des Aktors der Entriegelungsvorrichtung eine Einstellung des Entriegelungszustands des Werkzeughalters und damit ein Entfernen des Werkzeugs aus dem Werkzeughalter unabhängig von der Position des Montagegeräts. Das Montagegerät muss also nicht in eine vorgegebene Position gebracht werden, um ein Werkzeug aus dem Werkzeughalter und damit aus dem Montagegerät entfernen zu können. Wenn beispielsweise ein Werkzeug in Form eines Bohrers in einem Bohrloch festklemmt, kann durch eine entsprechende Ansteuerung des Aktors der Entriegelungsvorrichtung der Werkzeughalter in den Entriegelungszustand gebracht und damit der Bohrer freigegeben werden. Nach der Freigabe des Bohrers kann durch eine entsprechende Verlagerung des Montagegeräts vom Bohrer weg, der Bohrer aus dem Werkzeughalter und damit aus dem Montagegerät entfernt werden. Der Bohrer bleibt in diesem Fall im Loch stecken. Die genannte Verlagerung kann ebenfalls automatisiert, beispielsweise von einer mechatronischen Installationskomponente in Form eines Industrieroboters erfolgen. Nach dem Entfernen des Bohrers aus dem Montagegerät kann automatisiert ein neuer Bohrer aufgenommen und weitere Montageschritte automatisiert durchgeführt werden. Das Werkzeug kann auch als ein Setzwerkzeug zum schlagenden Eintreiben einer Ankerstange in ein Bohrloch ausgeführt sein. In diesem Fall kann es vorkommen, dass sich das Setzwerkzeug gegenüber der Ankerstange verkantet und es sich nach dem Einschlagen der Ankerstange nicht mehr von der Ankerstange lösen lässt. Dann kann analog zum beschriebenen Entfernen eines Bohrers das Setzwerkzeug vom Montagegerät entfernt werden und so ein manuelles Eingreifen eines Monteurs vermieden werden. Das Setzwerkezeug verbleibt in diesem Fall auf der in die Wand eingetriebenen Ankerstange.

Das Montagegerät ist insbesondere als ein mobiles Montagegerät ausgeführt. Darunter soll verstanden werden, dass sich das Montagegerät einfach transportieren lässt und an unterschiedlichen Orten eingesetzt werden kann. Es ist nicht Teil einer stationär in einer Maschinenhalle angeordneten Werkzeugmaschine.

Das Montagegerät ist insbesondere als eine Bohrvorrichtung, beispielsweise in Form einer Schlagbohrmaschine, oder als eine Setzvorrichtung zum schlagenden Eintreiben von Ankerstangen in Bohrlöcher ausgeführt. Damit dient das Montagegerät insbesondere zum Bohren von Löchern in die Wand oder zum schlagenden Eintreiben von Ankerstangen in Bohrlöcher in der Wand. Das Montagegerät kann insbesondere für eine automatisierte Durchführung von Montageschritten verwendet werden. Beispielsweise können mit dem Montagegerät automatisiert Montageschritte zur Montage einer Aufzuganlage in einem Aufzugschacht durchgeführt werden. Es sind aber auch andere Einsatzzwecke, beispielsweise Montageschritte beim Verlegen von Kabeln oder Montieren von Lüftungsrohren möglich.

Die Wand ist insbesondere als eine Wand in einem Gebäude ausgeführt, wobei auch ein Boden oder eine Decke in einem Gebäude als eine Wand angesehen werden kann. Die Wand kann aber beispielsweise auch an oder in einer Brücke, einem Pfeiler oder einem Schiff angeordnet sein. Die Wand besteht insbesondere aus mit Armierungen verstärktem Beton.

Die Antriebseinheit des Montagegeräts weist eine Antriebsmaschine, insbesondere einen Elektromotor auf, der von einer Steuerungseinrichtung des Montagegeräts angesteuert wird. Die einzelnen Bauteile der Antriebseinheit sind in einem Gehäuse angeordnet.

Der Werkzeughalter ist insbesondere über eine formschlüssige Verbindung mit der Antriebseinheit gekoppelt. Der Werkzeughalter einer Bohrvorrichtung wird auch als ein so genanntes Bohrfutter bezeichnet.

Das vom Werkzeughalter fixierte bzw. gehaltene und damit aufgenommene Werkzeug weist eine in eine Werkzeugrichtung langgestreckte Form auf. Das Werkzeug wird insbesondere um eine in Werkzeugrichtung verlaufende Achse gedreht, so dass die Werkzeugrichtung auch als Werkzeugachse bezeichnet werden kann. Das Werkzeug kann beispielsweise als ein Bohrer ausgeführt sein. Das Werkzeug kann auch als ein Setzwerkzeug zum schlagenden Eintreiben von Ankerstangen in Bohrlöcher ausgeführt sein. Auch ein derartiges Setzwerkzeug weist eine in einer Werkzeugrichtung langgestreckte Form auf. Das Setzwerkzeug kann beispielsweise entsprechend einem in der EP 3546127 A1 beschriebenen Setzwerkzeug ausgeführt sein. Der Werkzeughalter nimmt ein Ende des Werkzeugs auf, so dass sich der Rest des Werkzeugs in Werkzeugrichtung vom Werkzeughalter und damit auch von der Antriebseinheit weg erstreckt.

Die Verbindung zwischen Werkzeughalter und Werkzeug wird über eine reib- oder formschlüssige Verbindung hergestellt. Eine formschlüssige Verbindung kann beispielsweise über eine oder mehrere in entsprechende Nuten eintauchende Kugeln realisiert sein. Damit ist das Werkzeug von der Antriebseinheit über den Werkzeughalter antreibbar, also insbesondere um die Werkzeugachse rotierbar. Zusätzlich oder alternativ kann der Antrieb auch aus einer Übertragung von Schlägen in Werkzeugrichtung auf das Werkzeug ausgeführt sein.

Der Werkzeughalter kann einen Verriegelungszustand und einen Entriegelungszustand einnehmen. Im Verriegelungszustand ist ein vom Werkzeughalter aufgenommenes Werkzeug im Werkzeughalter fixiert und kann nicht aus dem Werkzeughalter entfernt werden. Beim Durchführen eines Montageschritts, also beispielsweise beim Bohren eines Lochs befindet sich der Werkzeughalter im Verriegelungszustand. Um das Werkzeug aus dem Werkzeughalter zu entfernen, beispielsweise weil es verschlissen ist und ersetzt werden muss oder weil für einen nächsten Montageschritt ein anderes Werkzeug benötigt wird, wird der Werkzeughalter in den Entriegelungszustand gebracht. Im Entriegelungszustand kann das Werkzeug aus dem Werkzeughalter entfernt, also insbesondere in Werkzeugrichtung aus dem Werkzeughalter herausgezogen werden.

Ein Einsetzen bzw. Einstecken eines Werkzeugs in den Werkzeughalter und damit in das Montagegerät ist insbesondere auch im Verriegelungszustand des Werkzeughalters möglich. Das Werkzeug muss dazu insbesondere eine passende Verdrehposition gegenüber dem Werkzeughalter aufweisen. Ein Einstecken kann beispielsweise in zwei definierten Verdrehpositionen möglich sein. Zum Einstecken eines Werkzeugs kann das Werkzeug beispielsweise in den Werkzeughalter gedrückt und anschliessend um die Werkzeugachse so lange verdreht werden, bis eine der definierten Verdrehpositionen erreicht und das Werkzeug vollends in den Werkzeughalter eingesteckt werden kann.

Die Entriegelungseinrichtung, mittels welcher der Werkzeughalter aus dem Verriegelungszustand in den Entriegelungszustand gebracht werden kann, ist Teil des Montagegeräts. Sie wird also bei einer Verlagerung des Montagegeräts mit verlagert. Sie ist insbesondere an der Antriebseinheit angeordnet. Der Aktor der Entriegelungseinrichtung kann beispielsweise als ein Elektromotor, ein Elektromagnet oder eine pneumatische oder hydraulische Kolben-Zylinder-Einheit ausgeführt sein. Der Aktor wird von einer Steuerungseinrichtung angesteuert. Die Steuerungseinrichtung kann auch die Antriebseinheit des Montagegeräts ansteuern. Sie kann aber auch als eine separate Steuerungseinrichtung ausgeführt sein.

In Ausgestaltung der Erfindung weist der Werkzeughalter einen Grundkörper und eine Verriegelungshülse auf. Die Verriegelungshülse ist gegenüber dem Grundkörper in Werkzeugrichtung verschiebbar, womit der Werkzeughalter vom Verriegelungszustand in den Entriegelungszustand und umgekehrt bringbar ist. Die Verriegelungshülse ist mittels des Aktors der Entriegelungsvorrichtung so verschiebbar, dass der Werkzeughalter vom Verriegelungszustand in den Entriegelungszustand bringbar ist. Damit kann der Werkzeughalter besonders einfach in den Entriegelungszustand gebracht werden.

Es ist auch möglich, dass der Werkzeughalter durch eine Verdrehung der Verriegelungshülse um die Werkzeugachse oder durch Drücken eines Entriegelungsknopfs in den Verriegelungszustand gebracht werden kann.

Die Kopplung des Werkzeughalters mit der Antriebseinheit erfolgt dabei über den Grundkörper. Um den Werkzeughalter vom Verriegelungszustand in den Entriegelungszustand zu bringen, muss die Verriegelungshülse insbesondere in Richtung Antriebseinheit geschoben werden. Dabei muss insbesondere eine Kraft einer Feder überwunden werden, die die Verriegelungshülse von der Antriebseinheit weg drückt, also den Werkzeughalter in den Verriegelungszustand bringen will. Der Aktor der Entriegelungsvorrichtung muss in diesem Fall nur eine Kraft auf die Verriegelungshülse in Richtung Antriebseinheit aufbringen und damit die Verriegelungshülse nur in Richtung Antriebseinheit verschieben können. Die für ein Zurückschieben der Verriegelungshülse von der Antriebseinheit weg notwendige Kraft wird von der genannten Feder aufgebracht, der Aktor muss die Verschiebung nur freigeben bzw. zulassen.

Der Grundkörper und die Verriegelungshülse weisen insbesondere eine hauptsächlich rotationssymmetrische Aussenkontur auf, wobei die Symmetrieachse in Werkzeugrichtung verläuft. Der Grundkörper taucht ein Stück in die Verriegelungshülse ein. Der Werkzeughalter kann beispielsweise entsprechend einem Werkzeughalter der DE 10 2012 22 3094 A1 ausgeführt sein.

In Ausgestaltung der Erfindung weist die Entriegelungsvorrichtung einen unbeweglichen Teil und einen in Werkzeugrichtung beweglichen Teil auf. Die Entriegelungsvorrichtung ist über den unbeweglichen Teil an der Antriebseinheit angeordnet. Am beweglichen Teil ist ein Koppelelement angeordnet, welches so ausgeführt und angeordnet ist, dass es die Verriegelungshülse in Werkzeugrichtung verschieben kann. Dies ermöglicht einen besonders einfachen Aufbau der Entriegelungsvorrichtung.

Der Aktor ist dabei insbesondere als eine pneumatisch betätigte Kolben-Zylinder-Einheit ausgeführt, wobei der Zylinder vom unbeweglichen Teil und der Kolben vom beweglichen Teil ausgebildet ist. Das Koppelelement weist insbesondere zwei senkrecht zur Werkzeugrichtung beabstandete Arme auf, die an gegenüberliegenden Seiten eines umlaufenden Bunds der Verriegelungshülse angreifen und so eine Kraft in Werkzeugrichtung auf die Verriegelungshülse aufbringen können. Die Arme liegen insbesondere so an dem genannten Bund der Verriegelungshülse an, dass nur eine Kraft in Richtung Antriebseinheit aufgebracht und damit die Verriegelungshülse von der Entriegelungsvorrichtung nur in Richtung Antriebseinheit verschoben werden kann. Die Kraft für die Verschiebung der Verriegelungshülse von der Antriebseinheit weg wird von einer entsprechend angeordneten Feder des Werkzeughalters aufgebracht. Die genannte Feder kann die Verriegelungshülse dann verschieben, wenn die Entriegelungsvorrichtung über das Koppelelement keine ausreichende Gegenkraft auf die Verriegelungshülse aufbringt und die Verschiebung damit freigibt bzw. zulässt.

Der Aktor der Entriegelungsvorrichtung in Form der Kolben-Zylinder-Einheit wird dabei durch eine Beaufschlagung mit Druckluft angesteuert. Um Druckluft an der Kolben-Zylinder-Einheit anzulegen, steuert eine Steuerungseinrichtung wenigstens ein vorgeschaltetes Ventil entsprechend an. Wenn Druckluft angelegt wird, wird der bewegliche Teil und damit über das Koppelelement die Verriegelungshülse in Richtung Antriebseinheit in Werkzeugrichtung verschoben. Damit wird der Werkzeughalter vom Verriegelungszustand in den Entriegelungszustand gebracht. In diesem Zustand des Werkzeughalters kann das Werkzeug aus dem Werkzeughalter und damit vom Montagegerät entfernt, also in Werkzeugrichtung vom Werkzeughalter und damit vom Montagegerät weggezogen werden. Um die Bewegung des beweglichen Teils der Entriegelungsvorrichtung zu begrenzen, weist der bewegliche Teil insbesondere einen Anschlag auf, der bei Erreichen der maximalen Bewegung beispielsweise am unbeweglichen Teil der Entriegelungsvorrichtung oder an der Antriebseinheit des Montagegeräts anstösst.

Nach dem Entfernen des Werkzeugs wird die Beaufschlagung der Kolben-Zylinder-Einheit beendet und der Zylinder entlüftet. Mittels der Feder wird die Verriegelungshülse von der Antriebseinheit in Werkzeugrichtung weggedrückt und damit der Werkzeughalter wieder in den Verriegelungszustand gebracht. Über das Koppelelement wird damit auch der bewegliche Teil der Entriegelungsvorrichtung wieder in Werkzeugrichtung von der Antriebseinheit weggedrückt.

Es ist auch möglich, dass die Kolben-Zylinder-Einheit zwei Druckluftanschlüsse aufweist. Damit kann durch eine entsprechende Beaufschlagung einer der beiden Druckluftanschlüsse der Kolben, also der bewegliche Teil der Entriegelungsvorrichtung mit dem Koppelelement in die gewünschte Richtung verschoben werden.

In Ausgestaltung der Erfindung weist die Antriebseinheit eine Schnittstelle auf, über welche Steuersignale an die Antriebseinheit übermittelt werden können. Damit kann das Montagegerät besonders einfach von einer mechatronischen Installationskomponente insbesondere von einem Industrieroboter verwendet werden.

Die über die Schnittstelle übermittelten Steuersignale können beispielsweise als Anweisungen zum Starten oder Stoppen der Antriebsmaschine der Antriebseinheit oder auch als eine Soll-Drehzahl der Antriebsmaschine ausgeführt sein. Über die Schnittstelle kann auch Energie, insbesondere elektrische Energie zum Betrieb der Antriebseinheit, übertragen werden. Die Schnittstelle kann auch dazu dienen, eine mechanische Verbindung zur Antriebseinheit und damit zum Montagegerät herzustellen oder Druckluft für das Montagegerät zur Verfügung zu stellen. Die Schnittstelle kann beispielsweise als ein Teil eines Schnellwechselsystems für Industrieroboter ausgeführt sein. Es ist auch möglich, dass die Antriebseinheit mehrere unterschiedliche Schnittstellen aufweist.

Der Montagerahmen der Montagevorrichtung kann beispielsweise als einfache Plattform, Gestell, Gerüst, Kabine oder Ähnliches mit optionalen Anbauteilen ausgebildet sein. Er ist insbesondere hauptsächlich aus Metall, beispielsweise Metallprofilen hergestellt. Der Montagerahmen kann beispielsweise entsprechend einer in der WO 2017/016780 A1 beschriebenen Trägerkomponente ausgeführt sein.

Die mechatronische Installationskomponente der Montagevorrichtung ist insbesondere als ein Industrieroboter ausgeführt. Sie kann beispielsweise entsprechend einer in der WO 2017/016780 A1 beschriebenen mechatronischen Installationskomponente ausgeführt sein. Es sind aber auch andere Ausführungen der mechatronischen Installationskomponente möglich. Beispielsweise kann die mechatronische Installationskomponente nur über einen Arm verfügen, der mittels eines Aktors in einer Richtung ein- und ausfahrbar ist.

Der Greifer der Montagevorrichtung weist wenigstens einen, insbesondere zwei Greifarme auf, die mittels wenigstens eines Aktors aufeinander zu und voneinander weg bewegt werden können. Damit kann ein zwischen den Greifarmen angeordnetes Werkzeug festgeklemmt und damit fixiert oder freigegeben werden. Die Greifarme weisen dazu eine mit einer Aussenkontur des Werkzeugs korrespondierende Form auf. Der Greifer kann beispielsweise elektrisch, pneumatisch oder hydraulisch betätigt werden.

Der Greifer und damit auch die Greifarme sind insbesondere hauptsächlich aus Metall, beispielsweise in Form von Edelstahl ausgeführt. Ein oder beide Greifarme können auf ihrer jeweiligen Innenseite, also der zum Werkzeug gerichteten Seite, eine elastische Einlage oder Schicht, beispielsweise in Form einer Gummieinlage aufweisen. Damit können vorteilhafterweise Toleranzen zwischen einer Sollpositionierung und einer tatsächlichen Positionierung von Greifer gegenüber dem Werkzeug ausgeglichen werden. Dies ermöglicht einen besonders robusten automatisierten Wechsel des Werkzeugs.

Die Montagevorrichtung ist so konfiguriert, dass die mechatronische Installationskomponente das Montagegerät so positionieren kann, dass der Greifer ein im Werkzeughalter des Montagegeräts gehaltenes Werkzeug festklemmen und fixieren kann. Der Greifer bzw. der oder die Aktoren des Greifers werden dabei insbesondere von derselben Steuerungseinrichtung angesteuert, welche auch die Antriebsmaschine des Montagegeräts ansteuert. Es kann aber auch eine separate Steuerungseinrichtung für die Ansteuerung vorgesehen sein.

In Ausgestaltung der Erfindung ist der Greifer über eine unbeweglich am Montagerahmen angeordnete Halterung aus einer Ruheposition in Werkzeugrichtung verschiebbar am Montagerahmen angeordnet. Der Greifer wird dabei mittels einer Feder in die Ruheposition gedrückt. Damit wird vorteilhaft ein oben beschriebenes Einsetzen bzw. Einführen eines Werkzeugs durch ein Eindrücken mit gleichzeitiger Drehung des Werkzeugs in den Werkzeughalter ermöglicht. Wenn das Werkzeug eine der oben beschriebenen definierten Verdrehpositionen erreicht, wird der Greifer und damit das Werkzeug von der genannten Feder in Werkzeugrichtung in Richtung Werkzeughalter verschoben und so das Werkzeug vollends in den Werkzeughalter eingesteckt.

Der Greifer kann beispielsweise zwischen 10 und 30 mm aus der Ruheposition in Werkzeugrichtung gegenüber der Halterung verschoben werden. Die Verbindung zwischen der Halterung und dem Greifer wird beispielsweise mittels einer oder insbesondere zweier Gleitführungen hergestellt.

In Ausgestaltung der Erfindung verfügt die Montagevorrichtung über eine erste Sensoreinheit, mittels welcher eine Position des Greifers gegenüber der genannten Halterung in Werkzeugrichtung erfassbar ist. Damit kann das Einsetzen bzw. Einstecken eines Werkzeugs in den Werkzeughalter überwacht werden. Somit kann ein die Montagevorrichtung verwendendes Montageverfahren oder ein entsprechender Montageprozess besonders prozesssicher ausgeführt werden.

Die erste Sensoreinheit kann so ausgeführt sein, dass sie die genannte Position des Greifers kontinuierlich erfassen kann, also beispielsweise einen Entfernungssensor aufweisen. Es ist auch möglich, dass nur einzelne diskrete Positionen des Greifers, also beispielsweise die Ruheposition, eine Endposition bei einer maximalen Verschiebung und eine Position bei korrekter Aufnahme des Werkzeugs im Werkzeughalter erfasst werden können. Dazu kann die erste Sensorposition einen oder mehrere Positionsschalter aufweisen.

Durch eine Überwachung der Position des Greifers kann insbesondere erkannt werden, ob das Werkzeug korrekt in den Werkzeughalter eingesteckt, also korrekt vom Werkzeughalter aufgenommen wurde. Bei einem korrekten Einstecken des Werkzeugs muss die Position des Greifers von der Ruheposition entweder direkt oder über die Position der maximalen Verschiebung in die Position bei korrekter Aufnahme des Werkzeugs im Werkzeughalter wechseln.

In Ausgestaltung der Erfindung ist der Greifer so ausgeführt, dass er wenigstens zwei verschiedene Werkzeuge fixieren kann. Damit kann die Montagevorrichtung unterschiedliche Werkzeuge verwenden und damit unterschiedliche Montageschritte ausführen. Sie ist somit sehr flexibel einsetzbar.

Der Greifer ist insbesondere so ausgeführt, dass er beispielsweise
- Bohrer mit verschiedenen Durchmessern,
- einen Bohrer und ein Setzwerkzeug oder
- Bohrer mit verschiedenen Durchmessern und ein Setzwerkzeug
fixieren kann. Es ist ausserdem möglich, dass er auch andere Arten von Werkzeugen fixieren kann.

Die Greifarme des Greifers weisen dazu insbesondere mehrere Ausnehmungen auf, die an die Aussenkonturen der zu fixierenden Werkzeuge angepasst sind.

In Ausgestaltung der Erfindung kann der Greifer einen Offen-Zustand und einen Geschlossen-Zustand einnehmen. Am Greifer ist eine zweite Sensoreinheit angeordnet, mittels welcher ein Zustand des Greifers erkannt werden kann. Damit kann das Fixieren eines Werkzeugs durch den Greifer überwacht werden. Somit kann ein die Montagevorrichtung verwendendes Montageverfahren oder ein entsprechender Montageprozess besonders prozesssicher ausgeführt werden.

Es ist auch möglich, dass der Greifer einen Fixier-Zustand einnehmen kann, der zwischen dem Offen- und dem Geschlossen-Zustand liegt. Der Greifer nimmt den Fixier-Zustand dann ein, wenn er vom Offen-Zustand in Richtung Geschlossen-Zustand geführt wird und ein Werkzeug so zwischen seinen Greifarmen angeordnet ist, dass er das Werkzeug festklemmt bzw. fixiert. Das Werkzeug verhindert damit das Einnehmen des Geschlossen-Zustands. Es kann damit erkannt werden, ob der Greifer ein Werkzeug fixiert oder nicht.

Die zweite Sensorvorrichtung kann so ausgeführt sein, dass sie den Zustand des Greifers kontinuierlich erfassen kann, also beispielsweise einen den Abstand der Greifarme erfassenden Entfernungssensor aufweisen. Es ist auch möglich, dass nur einzelne diskrete Positionen der Greifarme, also beispielsweise die Positionen im Offen- / Fixier- und/oder Geschlossen-Zustand erfasst werden können. Dazu kann die zweite Sensoreinheit einen oder mehrere Positionsschalter aufweisen.

In Ausgestaltung der Erfindung ist am Greifer eine Lichtschranke angeordnet, welche so ausgeführt und angeordnet ist, dass das Werkzeug senkrecht zur Werkzeugrichtung durch die Lichtschanke hindurch verlagert werden kann. Damit kann ein die Montagevorrichtung verwendendes Montageverfahren oder ein entsprechender Montageprozess besonders prozesssicher ausgeführt werden.

Mit der Lichtschranke kann beispielsweise überwacht werden, ob dem Greifer ein Werkzeug zum Fixieren zugeführt wird. Die Lichtschranke muss dann so angeordnet werden, dass ein dem Greifer zugeführtes Werkzeug durch die Lichtschanke geführt, also einen Lichtstrahl der Lichtschranke unterbricht.

Zusätzlich oder alternativ kann mittels der Lichtschranke ein Durchmesser des Werkzeugs bestimmt werden. Da die Position und Orientierung der mechatronischen Installationskomponente und damit auch die Positionen und Orientierungen des Montagegeräts und des Werkzeugs bekannt sind, kann bei einem Verlagern des Werkzeugs durch die Lichtschranke senkrecht zur Werkzeugrichtung der Durchmesser des Werkzeugs bestimmt werden. Mit dem so bestimmten Durchmesser kann geprüft werden, ob der Durchmesser noch Sollvorgaben entspricht und gegebenenfalls ein Wechsel des Werkzeugs initiiert werden.

Zusätzlich oder alternativ kann mittels der Lichtschranke die Erstreckung des Werkzeugs in Werkzeugrichtung bestimmt werden. Das Werkzeug kann dazu so lange in Werkzeugrichtung auf den Lichtstrahl der Lichtschranke zubewegt werden, bis der Lichtstrahl unterbrochen wird. Aus der Position und Orientierung des Montagegeräts kann auf die Erstreckung des Werkzeugs in Werkzeugrichtung geschlossen werden. Damit kann beispielsweise ein Abbrechen eines Teils eines Bohrers, insbesondere einer so genannten Krone erkannt werden. Mit der so bestimmten Erstreckung des Werkzeugs kann geprüft werden, ob die Erstreckung noch Sollvorgaben entspricht und gegebenenfalls ein Wechsel des Werkzeugs initiiert werden.

Eine oben beschriebene Montagevorrichtung kann besonders vorteilhaft Teil eines Montagesystem zur Durchführung von Montageschritten an einer Wand in einem Schacht sein. Das Montagesystem weist dann zusätzlich eine Verlagerungskomponente zum Verlagern der Montagevorrichtung im Schacht auf.

Unter einem Schacht soll hier ein von Wänden in Form von Schachtwänden begrenzter langgestreckter Raum verstanden werden. Der Schacht hat insbesondere einen hauptsächlich rechteckigen Querschnitt, wobei auch andere Querschnitte denkbar sind. Der Schacht verläuft insbesondere in hauptsächlich vertikaler Richtung, so dass eine Verlagerung im Schacht hauptsächlich in vertikaler Richtung erfolgt. Der Schacht dient insbesondere als ein Aufzugschacht einer Aufzuganlage, in dem beim Betrieb der Aufzuganlage eine Kabine zum Transportieren von Personen und/oder Gegenständen in Verlagerungsrichtung verlagert wird. Der Schacht kann auch anderen Zwecken dienen, beispielsweise kann er als ein Lüftungsschacht oder zur Aufnahme von Rohren, Elektrokabel oder ähnlichem dienen.

Die Montagevorrichtung kann innerhalb des Schachts verlagert und damit an verschiedene Stellen, insbesondere in verschiedenen Höhen innerhalb des Schachts positioniert werden. Dazu ist die Montagevorrichtung insbesondere über ein Tragmittel, beispielsweise in Form eines Seils, einer Kette oder eines Riemens an der Verlagerungskomponente, insbesondere in Form einer Winde aufgehängt. Das Tragmittel kann von der Winde auf oder abgewickelt werden und die Montagevorrichtung damit im Schacht verlagert werden.

Die oben genannte Aufgabe wird auch von einem Verfahren zum Wechseln eines von einem oben beschriebenen Montagegerät einer oben beschriebenen Montagevorrichtung zur Durchführung von Montageschritten an einer Wand gelöst, wobei das Verfahren folgenden Schritte aufweist:
- Verlagern des Montagegeräts mit einem im Werkzeughalter aufgenommenen alten Werkzeug mittels der mechatronischen Installationskomponente, so dass das alte Werkzeug eine Halteposition einnimmt, in welcher der Greifer das alte Werkzeug fixieren kann,
- Fixieren des alten Werkzeugs mit dem Greifer,
- Bringen des Werkzeughalterns in den Entriegelungszustand mittels der Entriegelungsvorrichtung und
- Verlagern des Montagegeräts in Werkzeugrichtung vom alten Werkzeug weg wenigstens bis das alte Werkzeug nicht mehr in den Werkzeughalter eintaucht.

Das erfindungsgemässe Verfahren weist dieselben Vorteile wie das beschriebene Montagegerät auf.

In Ausgestaltung der Erfindung weist das Verfahren folgende weitere Schritte auf:
- Abstellen des Montagegeräts,
- Aufnehmen eines Greifwerkzeugs mit der mechatronischen Installationskomponente,
- Greifen eines neuen Werkzeugs mit dem Greifwerkzeug aus einem Magazin,
- Verlagern des Greifwerkzeugs mit dem neuen Werkzeug mittels der mechatronischen Installationskomponente bis das neue Werkzeug eine Halteposition einnimmt, in welcher der Greifer das neue Werkzeug fixieren kann,
- Fixieren des neuen Werkzeugs mit dem Greifer,
- Abstellen des Greifwerkzeugs,
- Aufnehmen des Montagegeräts mit der mechatronischen Installationskomponente,
- Verlagern des Montagegeräts mit der mechatronischen Installationskomponente in eine Vorbereitungsposition,
- Verlagern des Montagegeräts in Werkzeugrichtung in Richtung neues Werkzeug bis das neue Werkzeug im Werkzeughalter eingesteckt ist.

Damit kann vorteilhafterweise nicht nur ein altes Werkzeug aus dem Werkzeughalter eines Montagegeräts entfernt, sondern auch ein neues Werkzeug eingesteckt werden. Dies ermöglicht eine weitgehend automatisierte Durchführung von Montageschritten ohne die Notwendigkeit manueller Eingriffe eines Monteurs.

Unter einem Abstellen des Montagegeräts bzw. des Greifwerkzeugs soll hier verstanden werden, dass das Montagegerät bzw. das Greifwerkzeug von der mechatronischen Installationskomponente in einer dazu vorgesehenen Halterung angeordnet und anschliessend von der mechatronischen Installationskomponente getrennt bzw. abgekoppelt werden.

Unter einem Aufnehmen eines Greifwerkzeugs bzw. des Montagegeräts soll hier ein Aufnehmen durch bzw. Ankoppeln an die mechatronische Installationskomponente verstanden werden. Das Greifwerkzeug ist dazu ausgelegt, ein Werkzeug zu greifen und zu halten. Damit kann das Werkzeug von der mechatronischen Installationskomponente bewegt bzw. verlagert werden. Das Greifwerkzeug verfügt dazu insbesondere über zwei Greifarme, welche das Werkzeug zwischen sich festklemmen und damit halten können. Das Greifwerkzeug kann beispielsweise elektrisch, pneumatisch oder hydraulisch betätigt werden.

Die Vorbereitungsposition zeichnet sich dadurch aus, dass ausgehend von der Vorbereitungsposition das Montagegerät ausschliesslich in Werkzeugrichtung verlagert werden muss, um das neue Werkzeug in den Werkzeughalter einzustecken.

In Ausgestaltung der Erfindung wird beim Verlagern des Montagegeräts in Werkzeugrichtung in Richtung neues Werkzeug der Werkzeughalter um eine Achse in Werkzeugrichtung gedreht. Damit kann wie oben beschrieben ein Werkzeug im Werkzeughalter eingesteckt werden.

Das Drehen des Werkzeughalters kann dabei durch eine Drehung des gesamten Montageräts mittels der mechatronischen Installationskomponente erfolgen. Es ist auch möglich, dass nur der Werkzeughalter mittels der Antriebsmaschine der Antriebseinheit gedreht wird. Der Werkzeughalter wird insbesondere um mindestens 180° gedreht. Es ist auch möglich, dass ein erfolgtes Einstecken des neuen Werkzeugs mittels einer der Sensoreinrichtungen erkannt und als Folge davon die Drehung beendet wird.

In Ausgestaltung der Erfindung weist das Verfahren folgende weitere Schritte auf:
- Greifen des im Greifer fixierten alten Werkzeugs mit dem Greifwerkzeug,
- Freigeben des alten Werkzeugs durch den Greifer und
- Abstellen des alten Werkzeugs in einem Magazin.

Damit werden vorteilhafterweise alte Werkzeuge in einem Magazin gesammelt und können beispielsweise später aufgearbeitet und wiederverwendet werden.

Das alte Werkzeug kann im selben Magazin abgestellt werden, in dem auch die neuen Werkzeuge aufbewahrt werden. Es ist aber auch möglich, dass für die Aufbewahrung ein separates Magazin, beispielsweise in Form eines Behälters vorgesehen ist.

Die erfolgreiche Durchführung einzelner Verfahrensschritte kann wie oben beschrieben mit Hilfe der Erfassungen der oben beschriebenen Sensoreinrichtungen überprüft werden. Es können insbesondere folgende Überprüfungen durchgeführt werden, wobei es nicht notwendig ist, alle Überprüfungen durchzuführen:
- Beim Verlagern des Montagegeräts damit das alte Werkzeug die Halteposition einnimmt, kann mit der Lichtschranke geprüft werden, ob das alte Werkzeug tatsächlich die Halteposition eingenommen hat. In diesem Fall ist der Lichtstrahl vom alten Werkzeug unterbrochen worden.
- Ein korrektes Fixieren des alten und des neuen Werkzeugs kann mit der zweiten Sensoreinheit überprüft werden.
- Nachdem das Montagegerät zum Entfernen des alten Werkzeugs vom Greifer weg verlagert wurde, kann mit der zweiten Sensoreinheit geprüft werden, ob das alte Werkzeug immer noch im Greifer fixiert und damit das Entfernen des alten Werkzeugs aus dem Montagegerät erfolgreich war.
- Das korrekte Einstecken eines neuen Werkzeugs in den Werkzeughalter kann wie oben beschrieben mit der ersten Sensoreinheit überprüft werden.

Es wird darauf hingewiesen, dass einige der möglichen Merkmale und Vorteile der Erfindung hierin mit Bezug auf unterschiedliche Ausführungsformen des erfindungsgemässen Montagegeräts einerseits und des erfindungsgemässen Verfahrens andererseits beschrieben sind.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind. Die Zeichnungen sind lediglich schematisch und nicht massstabsgetreu. In den Zeichnungen ist das Montagegerät als eine Schlagbohrmaschine und das Werkzeug als ein Bohrer ausgeführt. Das Montagegerät kann auch als ein anderes Gerät, beispielsweise ein Montagegerät zum schlagenden Eintreiben von Ankerbolzen in Bohrlöcher und das Werkzeug als ein anderes Werkzeug, beispielsweise als ein Setzwerkzeug zum schlagenden Eintreiben von Ankerbolzen in Bohrlöcher ausgeführt sein.

Dabei zeigen:
- Fig. 1: ein Montagegerät mit einer Entriegelungsvorrichtung und einen Greifer einer Montagevorrichtung in einer Seitenansicht,
- Fig. 2: ein Koppelelement der Entriegelungsvorrichtung aus Fig. 1 in einer Sicht von oben,
- Fig. 3: den Greifer aus Fig. 1 in einer Sicht von oben und
- Fig. 4: ein Montagesystem mit einer Montagevorrichtung und einer Verlagerungskomponente in einem Aufzugschacht.

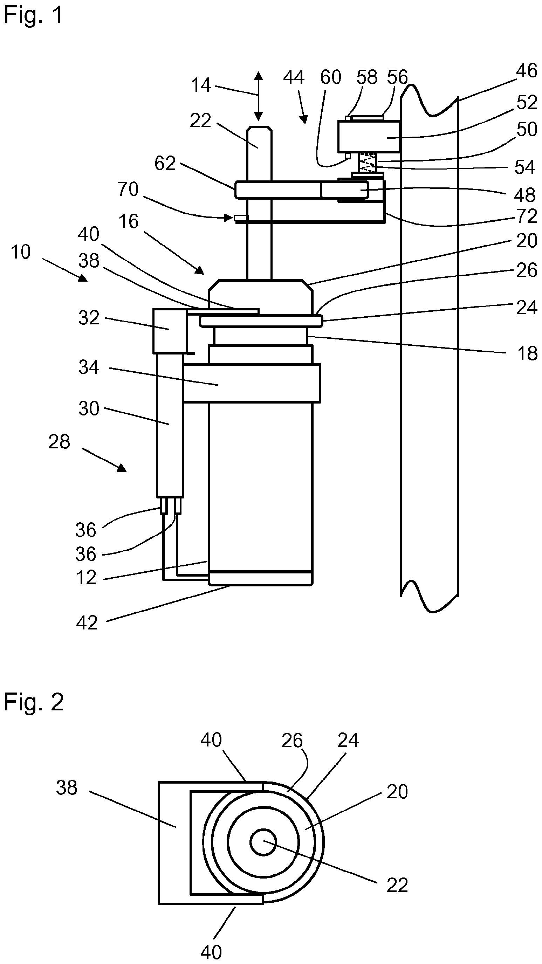

Gemäss Fig. 1 verfügt ein Montagegerät 10 in Form einer Schlagbohrmaschine über eine Antriebseinheit 12, die eine hauptsächlich zylinderförmige Grundform aufweist. Die Antriebseinheit 12 weist eine nicht dargestellte Antriebsmaschine in Form eines Elektromotors auf. Die Antriebseinheit wird von einer nicht dargestellten Steuerungseinrichtung der Antriebseinheit 12 angesteuert. In einer Werkzeugrichtung 14, welche in der Fig. 1 in vertikaler Richtung verläuft und in der die Antriebseinheit 12 ausgerichtet ist, ist nach oben ein Werkzeughalter 16 in Form eines so genannten Bohrfutters mit der Antriebseinheit 12 gekoppelt.

Der Werkzeughalter 16 weist eine hauptsächlich rotationssymmetrische Aussenkontur auf, wobei die Symmetrieachse in Werkzeugrichtung 14 verläuft. Der Werkzeughalter 16 verfügt über einen Grundkörper 18, der über eine nicht dargestellte formschlüssige Verbindung so mit der Antriebseinheit 12 gekoppelt ist, dass der Grundkörper 18 und damit der Werkzeughalter 16 von der Antriebseinheit 12 in eine Rotation um die genannte Symmetrieachse des Werkzeughalters 16 versetzt werden kann. Der Grundkörper 18 des Werkzeughalters 16 ist drehfest mit einer Verriegelungshülse 20 verbunden, in die er teilweise eintaucht. In den Werkzeughalter 16 ist ein sich in Werkzeugrichtung 14 vom Werkzeughalter 16 weg erstreckendes Werkzeug 22 in Form eines Bohrers aufgenommen. Das Werkzeug 22 ist drehfest mit dem Werkzeughalter 16 gekoppelt, so dass auch das Werkzeug 22 von der Antriebseinheit 12 angetrieben, also ebenfalls in Rotation versetzt werden kann. Mit dem Montagegerät 10 und dem vom Werkzeughalter 16 aufgenommenen Werkzeug 22 können Löcher in eine Wand gebohrt werden.

Der Werkzeughalter 16 kann einen Verriegelungszustand und einen Entriegelungszustand einnehmen, wobei ein vom Werkzeughalter 16 aufgenommenes Werkzeug 22 im Entriegelungszustand aus dem Werkzeughalter 16 entfernbar und im Verriegelungszustand im Werkzeughalter 16 so fixiert ist, dass es nicht entfernt werden kann. Um den Werkzeughalter 16 in den Entriegelungszustand zu bringen, muss die Entriegelungshülse 20 gegen die Kraft einer nicht dargestellten Feder des Werkzeughalters 16 in Werkzeugrichtung 14 zur Antriebseinheit 12 hin verschoben werden. Die Entriegelungshülse 20 weist an ihrer Aussenkontur einen umlaufenden Bund 24 auf, welcher eine kreisringförmige, senkrecht zur Werkzeugrichtung 14 verlaufende Betätigungsfläche 26 ausbildet. Über diese Betätigungsfläche 26 kann eine Kraft zum Verschieben der Entriegelungshülse 20 in Richtung Antriebseinheit 12 und damit zum Einstellen des Entriegelungszustands des Werkzeughalters 16 auf die Entriegelungshülse 20 aufgebracht werden.

Das Montagegerät 10 verfügt über eine Entriegelungsvorrichtung 28, welche einen unbeweglichen Teil 30 und einen in Werkzeugrichtung 14 beweglichen Teil 32 aufweist. Die Entriegelungsvorrichtung 28 ist über den unbeweglichen Teil 30 und einen die Antriebseinheit 12 umgreifenden Halter 34 fest mit der Antriebseinheit 12 verbunden. Der unbewegliche Teil 30 und der bewegliche Teil 32 der Entriegelungsvorrichtung bilden einen pneumatischen Aktor in Form einer Kolben-Zylinder-Einheit. Der Zylinder wird dabei vom unbeweglichen Teil 30 und der Kolben vom beweglichen Teil 32 gebildet. Am unbeweglichen Teil 30 sind zwei Druckluftanschlüsse 36 angeordnet, über die Druckluft zugeführt und damit die Kolben-Zylinder-Einheit angesteuert werden kann. Durch eine Zuführung von Druckluft an den entsprechenden Druckluftanschluss 36 kann der bewegliche Teil 32 in Werkzeugrichtung 14 vom unbeweglichen Teil 30 weg oder zu ihm hin verschoben werden.

Am beweglichen Teil 32 der Entriegelungsvorrichtung 28 ist eine senkrecht zur Werkzeugrichtung 14 verlaufendes Koppelelement 38 angeordnet. Das Koppelelement 38 weist eine U-förmige Grundform mit zwei Armen 40 auf und ist so angeordnet, dass die Arme 40 an der Betätigungsfläche 26 des umlaufenden Bunds 24 der Entriegelungshülse 20 anliegen. Das Koppelelement 38 und die Entriegelungshülse 20 sind in der Fig. 2 in einer Sicht von oben dargestellt. Durch ein Verschieben des beweglichen Teils 32 in Richtung des unbeweglichen Teils 30 der Entriegelungsvorrichtung 28 wird das Koppelelement 38 und damit die Verriegelungshülse 20 in Werkzeugrichtung 14 zur Antriebseinheit 12 hin verschoben und damit der Werkzeughalter 16 in den Entriegelungszustand gebracht. Wenn der bewegliche Teil 32 vom unbeweglichen Teil 30 der Entriegelungsvorrichtung 28 durch eine entsprechende Druckluftbeaufschlagung weggeschoben wird, wird das Koppelelement 38 von der Antriebseinheit 12 in Werkzeugrichtung 14 vom unbeweglichen Teil 30 weggeschoben. Die nicht dargestellte Feder des Werkzeughalters 16 kann damit die Verriegelungshülse 20 in Werkzeugrichtung 14 von der Antriebseinheit 12 wegdrücken, womit der Werkzeughalter 16 in den Verriegelungszustand gebracht wird.

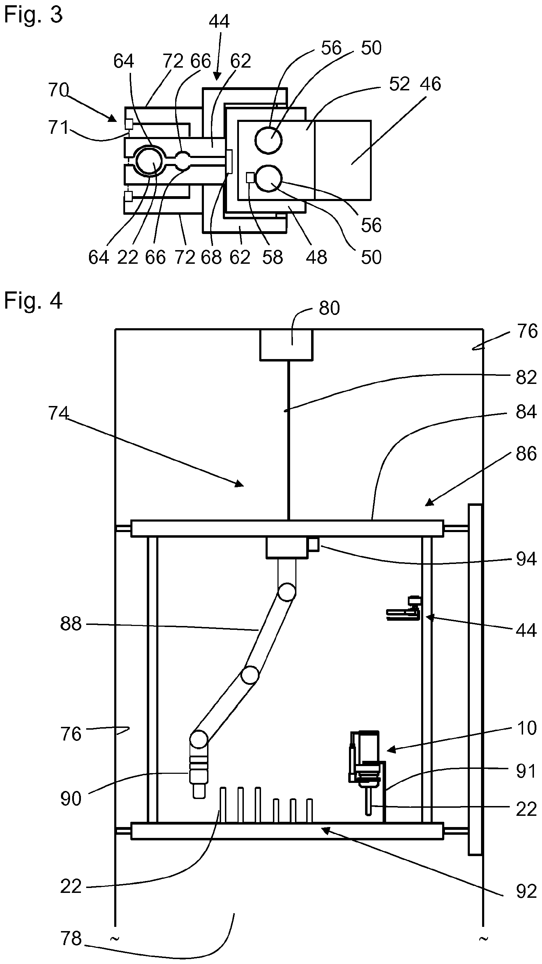

Die Antriebseinheit 12 weist ausserdem eine Schnittstelle 42 auf, über welche Steuersignale einer in Fig. 1 nicht dargestellten Steuerungseinrichtung (94 in Fig. 4) eines Montagesystems (74 in Fig. 4) an die Steuerungseinrichtung der Antriebseinheit 12 übermittelt werden können. Mit den Steuersignale kann beispielsweise der Elektromotor der Antriebseinheit 12 gestartet werden und ihm beispielsweise auch eine Soll-Drehzahl vorgegeben werden. Die Schnittstelle 42 ist gegenüber dem Werkzeughalter 16 an der Antriebseinheit 12 angeordnet. Die Schnittstelle 42 dient auch zur mechanischen Kopplung des Montagegeräts 10 an ein in der Fig. 1 nicht dargestellte mechatronische Installationskomponente in Form eines Industrieroboters (88 in Fig. 4) eines Montagesystems (74 in Fig. 4), sowie zur Zuführung von elektrischer Energie und Druckluft zum Montagegerät 10.

Mit Hilfe eines Greifers 44 und einer entsprechenden Verlagerung des Montagegeräts 10 relativ zum Greifer 44 kann das Werkzeug 22 des Montagegeräts 10 gewechselt, also ein altes Werkzeug aus dem Werkzeughalter 16 entfernt und ein neues Werkzeug in den Werkzeughalter 16 eingesteckt werden. Der Greifer 44 ist dazu an einem in Werkzeugrichtung 14 verlaufenden Längsholm 46 eines mobilen Montagerahmens (84 in Fig. 4) einer Montagevorrichtung (86 in Fig. 4) zur Durchführung von Montageschritten an einer Wand (76 in Fig. 4) angeordnet.

Der Greifer 44 verfügt über einen Basiskörper 48, der über zwei Stangen 50 mit einer unbeweglich am Längsholm 46 angeordneten Halterung 52 in Werkzeugrichtung 14 verschieblich verbunden ist. Zwischen den beiden Stangen 50 ist eine sich in Werkzeugrichtung 14 zwischen Halterung 52 und Basiskörper 48 erstreckende Schraubenfeder 54 so angeordnet, dass sie den Basiskörper 48 und damit den Greifer 44 von der Halterung 52 weg drückt. Die Stangen 50 sind in Werkzeugrichtung 14 durch die Halterung 52 hindurchgeführt und können gegenüber der Halterung 52 in Werkzeugrichtung 14 verschoben werden, womit die genannte verschiebliche Verbindung zwischen Halterung 52 und Greifer 44 realisiert wird. Die Stangen 50 und die zugehörigen Durchführungen durch den Basiskörper 48 bilden damit zwei Gleitführungen. Die Stangen 50 weisen einen umlaufenden Bund 56 auf, der auf der dem Greifer 44 gegenüberliegenden Seite der Halterung 52 angeordnet ist und die Verschiebung des Greifers 44 gegenüber der Halterung 52 nach unten begrenzt. In der Fig. 1 ist eine Ruheposition des Greifers 44 dargestellt, in der er einen maximalen Abstand von der Halterung 52 aufweist, der Bund 56 der Stangen 50 also auf der Halterung 52 aufliegt. Um die Position des Greifers 44 gegenüber der Halterung 52 erfassen zu können, ist auf der dem Greifer 44 gegenüberliegenden Seite der Halterung 52 ein erster Sensor 58 angeordnet. Der erste Sensor 58 erkennt, wenn der Bund 56 der Stangen 50 an der Halterung 52 aufliegt, der Greifer 44 also in der Ruheposition ist. Auf der zum Greifer 44 gerichteten Seite der Halterung 52 ist ein zweiter Sensor 60 angeordnet, welcher erkennt, wenn der Greifer 44 wenigstes um ein vorgegebenes Stück in Richtung Halterung 52 verschoben wurde. Der zweite Sensor 60 erkennt insbesondere eine Verschiebung des Greifers 44, die ein wenig geringer als die die maximale Verschiebung ist. Der erste und der zweite Sensor 58 und 60 sind dabei als Näherungssensoren ausgeführt und bilden eine erste Sensoreinheit.

Der Greifer 44 verfügt über zwei Greifarme 62, welche an zwei sich gegenüberliegenden Seiten des Grundkörpers 48 angeordnet sind. Über einen im Grundkörper angeordneten, nicht weiter dargestellten pneumatisch betätigten Aktor können die Greifarme 62 voneinander weg oder aufeinander zu bewegt werden. Die Greifarme 62 erstrecken sich in Richtung Werkzeug 22 und weisen je zwei korrespondierende Ausnehmungen 64, 66 auf (siehe Fig. 3). Der Greifer 44 und die Greifarme 62 sind insbesondere aus Edelstahl ausgeführt. Die Greifarme können auf ihrer jeweiligen Innenseite, also der zum Werkzeug gerichteten Seite, eine nicht dargestellte Gummieinlage aufweisen.

Das Werkzeug 22 ist in den Fig. 1 und 3 so positioniert, dass es im Bereich der Ausnehmungen 64 durch die Greifarme 62 hindurch ragt. Das Werkzeug 22 ist dann in einer so genannten Halteposition gegenüber dem Greifer 44. Die Kontur der Ausnehmungen 64 ist dabei an die Aussenkontur des Werkzeugs 22 angepasst. Ein Werkzeug mit einem kleineren Durchmesser würde passend zu den Ausnehmungen 66 positioniert werden. Wenn ausgehend von der in den Fig. 1 und 3 dargestellten Situation die Greifarme 62 aufeinander zu bewegt werden, klemmen sie das Werkzeug 22 zwischen sich ein und fixieren so das Werkzeug 22.

Der Greifer 44 kann durch eine entsprechende Bewegung der Greifarme 62 drei verschiedenen Zustände einnehmen. Wenn die Greifarme 62 so zueinander angeordnet sind, dass ein im Bereich der Ausnehmungen 64, 66 angeordnetes Werkzeug nicht festgeklemmt bzw. fixiert ist, dann ist der Greifer 44 im Offen-Zustand. Dieser Zustand ist in der Fig. 3 dargestellt. Wenn die Greifarme 62 so zueinander angeordnet sind, dass sie ein im Bereich der Ausnehmungen 64, 66 angeordnetes Werkzeug festklemmen bzw. fixieren, dann ist der Greifer 44 im Fixier-Zustand. Wenn sich die Greifarme 62 berühren, dann ist der Greifer im Geschlossen-Zustand, wobei dieser Zustand nur erreicht werden kann, wenn kein Werkzeug durch die Greifarme 62 hindurch ragt. Um die drei genannten Zustände erkennen zu können, ist am Grundkörper 48 eine zweite Sensoreinheit 68 angeordnet, die über drei nicht näher dargestellte Positionsschalter verfügt, wobei jeweils ein Positionsschalter einen der drei Zustände des Greifers 44 erkennen kann.

Der Greifer 44 verfügt ausserdem über eine Lichtschranke 70, die über ein Halteblech 72 am Grundkörper 48 angeordnet ist. Ein Lichtstrahl 71 der Lichtschranke 70 verläuft im Bereich der dem Grundköper 48 abgewandten Enden der Greifarme 62 senkrecht zur Werkzeugrichtung 14. Sie ist damit so angeordnet, dass ein dem Greifer 44 senkrecht zur Werkzeugrichtung 14 in Richtung Grundkörper 48 zugeführtes Werkzeug 22 durch die Lichtschanke 70 geführt wird, also der Lichtstrahl 71 der Lichtschranke 70 unterbrochen wird. Damit kann überprüft werden, ob auch tatsächlich ein Werkzeug 22 zum Fixieren im Greifer 44 in die Halteposition gebracht wird. Ausserdem kann beim Durchfahren der Lichtschranke 70 der Durchmesser des Werkzeugs 22 bestimmt werden. In den Fig. 1 und 3 verläuft die Werkzeugachse 14 vertikal und der Lichtstrahl 71 der Lichtschranke 70 horizontal. Das Werkzeug 22 wird zur Bestimmung seines Durchmessers horizontal und senkrecht zum Lichtstrahl 71 durch den Lichtstrahl 71 verlagert. Auf Grund der Informationen über die Position eines das Montagegerät 10 haltenden mechatronischen Installationskomponente (Industrieroboter 88 in Fig. 4) und dem Beginn der Unterbrechung der Lichtschranke 70 durch das Werkzeug 22 kann die Distanz zwischen dem Lichtstrahl 71 und der Werkzeugachse des Werkzeugs 22 und damit der Radius bzw. der Durchmesser des Werkzeugs 22 bestimmt werden. Es kann zusätzlich auch das Ende der Unterbrechung der Lichtschranke 70 berücksichtigt werden und so direkt der Durchmesser des Werkzeugs 22 bestimmt werden.

In Fig. 4 ist ein Montagesystem 74 zur Durchführung von Montageschritten an einer Wand 76 in einem senkrecht verlaufenden Schacht 78 in Form eines Aufzugschachts dargestellt. Oben im Schacht 78 ist eine Verlagerungskomponente in Form einer Winde 80 angeordnet. Die Winde 80 ist über ein Tragmittel in Form eines Seils 82 mit einem Montagerahmen 84 einer Montagevorrichtung 86 zur Durchführung von Montageschritten an der Wand 76 verbunden. Mittels der Winde 80 und dem Seil 82 kann der Montagerahmen 84 und damit die Montagevorrichtung 86 in vertikaler Richtung im Schacht 78 verlagert werden. Der Montagerahmen 84 kann sich im Schacht 78 fixieren, so dass er eine feste Position im Schacht 78 einnehmen kann. Oben am Montagerahmen 84 ist eine mechatronische Installationskomponente in Form eines nach unten hängenden Industrieroboters 88 angeordnet. Der Industrieroboter 88 kann wie in Fig. 4 dargestellt ein Greifwerkzeug 90 aufnehmen oder ein in Fig. 4 in einem Gerätemagazin 91 abgestelltes, oben beschriebenes Montagegerät 10 aufnehmen. Mit dem Greifwerkzeug 90 kann der Industrieroboter 88 oben beschriebene Werkzeuge 22 greifen und verlagern. Im unteren Bereich des Grundrahmens 84 ist ein Magazin 92 angeordnet, in welchem Werkzeuge 22 gelagert sind. Dabei kann es sich um neue bzw. einsetzbare oder auch alte bzw. verschlissene Werkzeuge handeln.

Oben am Montagerahmen 84 ist ausserdem eine Steuerungseinrichtung 94 angeordnet, welche die Winde 80, den Industrieroboter 88, das Greifwerkzeug 90 und das Montagegerät 10 ansteuert. Dazu weist das Montagesystem 74 nicht dargestellte Kommunikationsleitungen, Druckluftleitungen und Stromleitungen auf.

Wenn der Industrieroboter 88 ein Montagegerät 10 in Form einer Bohrmaschine aufgenommen hat, können durch eine entsprechende Ansteuerung des Industrieroboters 88 und des Montagegeräts 10 automatisiert Löcher in die Wände 76 des Schachts 78 gebohrt und damit automatisiert Montageschritte im Schacht 78 ausgeführt werden.

Werkzeuge 22 nutzen sich bei ihrer Benutzung ab, insbesondere wenn ein Bohrer beim Bohren eines Lochs auf eine Armierung in einer Wand 76 trifft. Die Montagevorrichtung 86 kann automatisiert ein Werkzeug 22 des Montagegeräts 10 wechseln, also ein altes Werkzeug 22 aus dem Montagegerät 10 entfernen und ein neues Werkzeug 22 einsetzen. Zum Wechseln eines Werkzeugs 22 eines Montageräts werden folgende Schritte ausgeführt:
- Aufnehmen des Montageräts 10 mit einem im Werkzeughalter 16 aufgenommenen alten Werkzeug 22 mit dem Industrieroboter 88,
- Verlagern des Montagegeräts 10 mit dem Industrieroboter 88, bis das alte Werkzeug 22 die in den Fig. 1 und 3 dargestellte Halteposition einnimmt, in der der Greifer 44 das alte Werkzeug 22 fixieren kann,
- Fixieren des alten Werkzeugs 22 mit dem Greifer 44,
- Bringen des Werkzeughalterns 16 in den Entriegelungszustand mittels der Entriegelungsvorrichtung 28,
- Verlagern des Montagegeräts 10 mit dem Industrieroboter 88 in Werkzeugrichtung 14 vom alten Werkzeug 22 weg bis das alte Werkzeug 22 nicht mehr in den Werkzeughalter 16 eintaucht,
- Abstellen des Montagegeräts 10 mit dem Industrieroboter 88 im Gerätemagazin 91,
- Aufnehmen des Greifwerkzeugs 90 aus dem Gerätemagazin 91 mit dem Industrieroboter 88,
- Greifen des im Greifer 44 fixierten alten Werkzeugs 22 mit dem Greifwerkzeug 90,
- Freigeben des alten Werkzeugs 22 durch den Greifer 44,
- Abstellen des alten Werkzeugs 22 im Magazin 92,
- Greifen eines neuen Werkzeugs 22 mit dem Greifwerkzeug 90 aus dem Magazin 92,
- Verlagern des Greifwerkzeugs 90 mit dem neuen Werkzeug 22 mittels des Industrieroboters 88 bis das neue Werkzeug 22 die in den Fig. 1 und 3 dargestellte Halteposition einnimmt, in welcher der Greifer 44 das neue Werkzeug 22 fixieren kann,
- Fixieren des neuen Werkzeugs 22 mit dem Greifer 44,
- Abstellen des Greifwerkzeugs 90 mit dem Industrieroboter 88 im Gerätemagazin 91,
- Aufnehmen des Montagegeräts 10 aus dem Gerätemagazin 91 mit dem Industrieroboter 88,
- Verlagern des Montagegeräts 10 mit dem Industrieroboter 88 in eine Vorbereitungsposition,
- Verlagern des Montagegeräts 10 in Werkzeugrichtung 14 in Richtung neues Werkzeug 22 bis das neue Werkzeug 22 im Werkzeughalter 16 des Montagegeräts 10 eingesteckt ist, wobei das Montagegerät 10 und damit der Werkzeughalter 16 um eine Achse in Werkzeugrichtung 14 gedreht wird, und
- Freigeben des neuen Werkzeugs 22 durch den Greifer 44.

Zusätzlich können mit den beiden oben beschriebenen Sensoreinheiten 58, 60 und 68 sowie der Lichtschranke 70 wie beschrieben einzelne Schritte des beschriebenen Verfahrens überprüft werden.

Abschliessend ist darauf hinzuweisen, dass Begriffe wie "aufweisend", umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Montagevorrichtung zur Durchführung von Montageschritten an einer Wand mit
- einem Montagegerät (10) mit
- einer Antriebseinheit (12) und
- einem Werkzeughalter (16),
wobei
der Werkzeughalter (16)
- an die Antriebseinheit (12) gekoppelt ist,
- dazu vorgesehen ist, ein sich in einer Werkzeugrichtung (14) vom Werkzeughalter (16) weg erstreckendes und von der Antriebseinheit (12) antreibbares Werkzeug (22) aufzunehmen und
- einen Verriegelungszustand und einen Entriegelungszustand einnehmen kann, wobei ein vom Werkzeughalter (16) aufgenommenes Werkzeug (22) im Entriegelungszustand aus dem Werkzeughalter (16) entfernbar und im Verriegelungszustand im Werkzeughalter (16) fixiert ist und
- eine Entriegelungsvorrichtung (28) mit einem ansteuerbaren Aktor (30, 32), welche so ausgeführt und angeordnet ist, dass mittels des Aktors (30, 32) der Werkzeughalter (16) vom Verriegelungszustand in den Entriegelungszustand bringbar ist,
- einem mobilen Montagerahmen (84),
- einer mechatronischen Installationskomponente (88) und
- einem ansteuerbaren Greifer (44) zum Fixieren eines Werkzeugs (22),
wobei die mechatronische Installationskomponente (88) und der Greifer (44) am Montagerahmen (84) angeordnet sind und das Montagegerät (10) von der mechatronischen Installationskomponente (88) aufnehmbar und verlagerbar ist.

2. Montagevorrichtung nach Anspruch 1,
**dadurch gekennzeichnet, dass**
der Greifer (44) über eine unbeweglich am Montagerahmen (84) angeordnete Halterung (52) aus einer Ruheposition in Werkzeugrichtung (14) verschiebbar am Montagerahmen (84) angeordnet ist, wobei der Greifer (44) mittels einer Feder (54) in die Ruheposition gedrückt wird.

3. Montagevorrichtung nach Anspruch 2,
**dadurch gekennzeichnet, dass**
die Montagevorrichtung (86) über eine erste Sensoreinheit (58, 60) verfügt, mittels welcher eine Position des Greifers (44) gegenüber der genannten Halterung (52) in Werkzeugrichtung (14) erfassbar ist.

4. Montagevorrichtung nach Anspruch 1, 2 oder 3,
**dadurch gekennzeichnet, dass**
der Greifer (44) so ausgeführt ist, dass er wenigstens zwei verschiedene Werkzeuge (22) fixieren kann.

5. Montagevorrichtung nach einem der vorhergehenden Ansprüche,
**dadurch gekennzeichnet, dass**
der Greifer (44) einen Offen-Zustand und einen Geschlossen-Zustand einnehmen kann und am Greifer (44) eine zweite Sensoreinheit (68) angeordnet ist, mittels welcher ein Zustand des Greifers (44) erkannt werden kann.

6. Montagevorrichtung nach einem der vorhergehenden Ansprüche,
**dadurch gekennzeichnet, dass**
am Greifer (44) eine Lichtschranke (70) angeordnet ist, welche so ausgeführt und angeordnet ist, dass das Werkzeug (22) senkrecht zur Werkzeugrichtung (14) durch die die Lichtschanke (70) hindurch verlagert werden kann.

7. Montagesystem zur Durchführung von Montageschritten an einer Wand in einem Schacht mit,
- einer Montagevorrichtung (86) nach einem der Ansprüche 1 bis 6 und
- und einer Verlagerungskomponente (80) zum Verlagern der Montagevorrichtung (86) im Schacht (78).

8. Verfahren zum Wechseln eines von einem Montagegerät einer Montagevorrichtung zur Durchführung von Montageschritten an einer Wand nach einem der Ansprüche 1 bis 6 aufgenommenen Werkzeugs mit folgenden Schritten:
- Verlagern des Montagegeräts (10) mit einem im Werkzeughalter (16) aufgenommenen alten Werkzeug (22) mittels der mechatronischen Installationskomponente (88), so dass das alte Werkzeug (22) eine Halteposition einnimmt, in welcher der Greifer (44) das alte Werkzeug (22) fixieren kann,
- Fixieren des alten Werkzeugs (22) mit dem Greifer (44),
- Bringen des Werkzeughalterns (16) in den Entriegelungszustand mittels der Entriegelungsvorrichtung (28) und
- Verlagern des Montagegeräts (10) in Werkzeugrichtung (14) vom alten Werkzeug (22) weg wenigstens bis das alte Werkzeug (22) nicht mehr in den Werkzeughalter (16) eintaucht.

9. Verfahren nach Anspruch 8,
mit den weiteren Schritten:
- Abstellen des Montagegeräts (10),
- Aufnehmen eines Greifwerkzeugs (90) mit der mechatronischen Installationskomponente (88),
- Aufnehmen eines neuen Werkzeugs (22) mit dem Greifwerkzeug (90) aus einem Magazin (92),
- Verlagern des Greifwerkzeugs (90) mit dem neuen Werkzeug (22) mittels der mechatronischen Installationskomponente (88) bis das neue Werkzeug (22) eine Halteposition einnimmt, in welcher der Greifer (44) das neue Werkzeug (22) fixieren kann,
- Fixieren des neuen Werkzeugs (22) mit dem Greifer (44),
- Abstellen des Greifwerkzeugs (90),
- Aufnehmen des Montagegeräts (10) mit der mechatronischen Installationskomponente (88),
- Verlagern des Montagegeräts (10) mit der mechatronischen Installationskomponente (88) in eine Vorbereitungsposition,
- Verlagern des Montagegeräts (10) in Werkzeugrichtung (14) in Richtung neues Werkzeug (22) bis das neue Werkzeug (22) im Werkzeughalter (16) eingesteckt ist.

10. Verfahren nach Anspruch 9,
**dadurch gekennzeichnet, dass**
beim Verlagern des Montagegeräts (10) in Werkzeugrichtung (14) in Richtung neues Werkzeug (22) der Werkzeughalter (16) um eine Achse in Werkzeugrichtung (14) gedreht wird.

11. Verfahren nach Anspruch 8, 9 oder 10,
mit den weiteren Schritten:
- Aufnehmen des im Greifer (44) fixierten alten Werkzeugs (22) mit dem Greifwerkzeug (90),
- Freigeben des alten Werkzeugs (22) durch den Greifer (44) und
- Abstellen des alten Werkzeugs (22) in einem Magazin (92).

## Claims

1. Installation device for carrying out installation steps on a wall, comprising
- an installation apparatus (10) having
- a drive unit (12) and
- a tool holder (16),
wherein
the tool holder (16)
- is coupled to the drive unit (12),
- is provided for receiving a tool (22) which extends away from the tool holder (16) in a tool direction (14) and can be driven by the drive unit (12), and
- can assume a locked state and an unlocked state, wherein a tool (22) received by the tool holder (16) can be removed from the tool holder (16) in the unlocked state and is fixed in the tool holder (16) in the locked state, and
- an unlocking device (28) which has a controllable actuator (30, 32) and is designed and arranged such that the tool holder (16) can be brought from the locked state into the unlocked state by means of the actuator (30, 32),
- a mobile installation frame (84),
- a mechatronic installation component (88), and
- a controllable gripper (44) for fixing a tool (22),
wherein the mechatronic installation component (88) and the gripper (44) are arranged on the installation frame (84) and the installation apparatus (10) can be received and moved by the mechatronic installation component (88).

2. Installation device according to claim 1,
**characterized in that**
the gripper (44) is arranged on the installation frame (84), via a holder (52) which is arranged in a stationary manner on the installation frame (84), so as to be movable from a rest position in the tool direction (14), the gripper (44) being pressed into the rest position by means of a spring (54).

3. Installation device according to claim 2,
**characterized in that**
the installation device (86) has a first sensor unit (58, 60), by means of which a position of the gripper (44) relative to the said holder (52) in the tool direction (14) can be detected.

4. Installation device according to claim 1, 2 or 3,
**characterized in that**
the gripper (44) is designed such that it can fix at least two different tools (22).

5. Installation device according to any of the preceding claims,
**characterized in that**
the gripper (44) can assume an open state and a closed state, and a second sensor unit (68) is arranged on the gripper (44), by means of which a state of the gripper (44) can be detected.

6. Installation device according to any of the preceding claims,
**characterized in that**
a light barrier (70) is arranged on the gripper (44), which light barrier is designed and arranged such that the tool (22) can be moved perpendicularly to the tool direction (14) through the the light barrier (70).

7. Installation system for performing installation steps on a wall in a shaft, comprising
- an installation device (86) according to any of claims 1 to 6, and
- and a movement component (80) for moving the installation device (86) in the shaft (78).

8. Method for exchanging a tool received by an installation apparatus of an installation device for carrying out installation steps on a wall according to any of claims 1 to 6, comprising the following steps:
- moving the installation apparatus (10) with an old tool (22) held in the tool holder (16) by means of the mechatronic installation component (88), such that the old tool (22) assumes a holding position in which the gripper (44) can fix the old tool (22),
- fixing the old tool (22) by means of the gripper (44),
- bringing the tool holder (16) into the unlocked state by means of the unlocking device (28), and
- moving the installation apparatus (10) away from the old tool (22) in the tool direction (14), at least until the old tool (22) is no longer inside the tool holder (16).

9. Method according to claim 8,
comprising the further steps of
- setting down the installation apparatus (10),
- receiving a gripping tool (90) by means of the mechatronic installation component (88),
- receiving a new tool (22) from a magazine (92) by means of the gripping tool (90),
- moving the gripping tool (90) with the new tool (22) by means of the mechatronic installation component (88) until the new tool (22) assumes a holding position in which the gripper (44) can fix the new tool (22),
- fixing the new tool (22) by means of the gripper (44),
- setting down the gripping tool (90),
- receiving the installation apparatus (10) by means of the mechatronic installation component (88),
- moving the installation apparatus (10) into a preparation position using the mechatronic installation component (88),
- moving the installation apparatus (10) in the tool direction (14) in the direction of the new tool (22) until the new tool (22) is inserted in the tool holder (16).

10. Method according to claim 9,
**characterized in that**,
when the installation apparatus (10) is moved in the tool direction (14) in the direction of the new tool (22), the tool holder (16) is rotated about an axis in the tool direction (14).

11. Method according to claim 8, 9 or 10,
comprising the further steps of
- receiving the old tool (22) fixed in the gripper (44) by means of the gripping tool (90),
- releasing the old tool (22) by means of the gripper (44), and
- setting down the old tool (22) in a magazine (92).

## Revendications

1. Dispositif de montage permettant de réaliser des étapes de montage sur une paroi, comportant
- un appareil de montage (10) comportant
- une unité d'entraînement (12) et
- un porte-outil (16),
dans lequel
le porte-outil (16)
- est accouplé à l'unité d'entraînement (12),
- est prévu pour recevoir un outil (22) s'étendant à l'écart du porte-outil (16) dans une direction d'outil (14) et pouvant être entraîné par l'unité d'entraînement (12) et
- peut adopter un état verrouillé et un état déverrouillé, un outil (22) reçu par le porte-outil (16) pouvant être retiré du porte-outil (16) à l'état déverrouillé et étant fixé dans le porte-outil (16) à l'état verrouillé et
- un dispositif de déverrouillage (28) comportant un actionneur (30, 32) commandable, lequel dispositif de déverrouillage étant conçu et disposé de telle sorte que, au moyen de l'actionneur (30, 32), le porte-outil (16) peut être amené de l'état verrouillé à l'état déverrouillé,
- un cadre de montage (84) mobile,
- un composant d'installation mécatronique (88) et
- un moyen de préhension (44) commandable permettant de fixer un outil (22),
le composant d'installation mécatronique (88) et le moyen de préhension (44) étant disposés au niveau du cadre de montage (84) et l'appareil de montage (10) pouvant être reçu et déplacé par le composant d'installation mécatronique (88).

2. Dispositif de montage selon la revendication 1,
**caractérisé en ce que**
le moyen de préhension (44) est disposé au niveau du cadre de montage (84) de manière à pouvoir être déplacé dans la direction d'outil (14) à partir d'une position de repos par l'intermédiaire d'un moyen de maintien (52) disposé de manière immobile au niveau du cadre de montage (84), le moyen de préhension (44) étant poussé dans la position de repos au moyen d'un ressort (54).

3. Dispositif de montage selon la revendication 2,
**caractérisé en ce que**
le dispositif de montage (86) dispose d'une première unité formant capteur (58, 60) au moyen de laquelle une position du moyen de préhension (44) par rapport audit moyen de maintien (52) dans la direction d'outil (14) peut être détectée.

4. Dispositif de montage selon la revendication 1, 2 ou 3,
**caractérisé en ce que**
le moyen de préhension (44) est conçu de telle sorte qu'il peut fixer au moins deux outils (22) différents.

5. Dispositif de montage selon l'une des revendications précédentes,
**caractérisé en ce que**
le moyen de préhension (44) peut adopter un état ouvert et un état fermé et une seconde unité formant capteur (68) est disposée au niveau du moyen de préhension (44), au moyen de laquelle seconde unité formant capteur un état du moyen de préhension (44) peut être identifié.

6. Dispositif de montage selon l'une des revendications précédentes,
**caractérisé en ce que**
une barrière lumineuse (70) est disposée au niveau du moyen de préhension (44), laquelle barrière lumineuse est conçue et disposée de telle sorte que l'outil (22) peut être déplacé perpendiculairement à la direction d'outil (14) à travers la barrière lumineuse (70).

7. Système de montage permettant de réaliser des étapes de montage sur une paroi dans une cage, comportant,
- un dispositif de montage (86) selon l'une des revendications 1 à 6 et
- et un composant de déplacement (80) permettant de déplacer le dispositif de montage (86) dans la cage (78).

8. Procédé permettant d'échanger un outil reçu par un appareil de montage d'un dispositif de montage permettant de réaliser des étapes de montage sur une paroi selon l'une des revendications 1 à 6, comportant les étapes suivantes :
- déplacement de l'appareil de montage (10) avec un ancien outil (22) reçu dans le porte-outil (16) au moyen du composant d'installation mécatronique (88), de telle sorte que l'ancien outil (22) adopte une position de maintien dans laquelle le moyen de préhension (44) peut fixer l'ancien outil (22),
- fixation de l'ancien outil (22) à l'aide du moyen de préhension (44),
- placement du porte-outil (16) dans l'état déverrouillé au moyen du dispositif de déverrouillage (28) et
- déplacement de l'appareil de montage (10) à l'écart de l'ancien outil (22) dans la direction d'outil (14) au moins jusqu'à ce que l'ancien outil (22) ne pénètre plus dans le porte-outil (16).

9. Procédé selon la revendication 8,
comportant les étapes supplémentaires de :
- dépôt de l'appareil de montage (10),
- réception d'un outil de préhension (90) avec le composant d'installation mécatronique (88),
- réception d'un nouvel outil (22) avec l'outil de préhension (90) à partir d'un magasin (92),
- déplacement de l'outil de préhension (90) avec le nouvel outil (22) au moyen du composant d'installation mécatronique (88) jusqu'à ce que le nouvel outil (22) adopte une position de maintien dans laquelle le moyen de préhension (44) peut fixer le nouvel outil (22),
- fixation du nouvel outil (22) à l'aide du moyen de préhension (44),
- dépôt de l'outil de préhension (90),
- réception de l'appareil de montage (10) avec le composant d'installation mécatronique (88),
- déplacement de l'appareil de montage (10) avec le composant d'installation mécatronique (88) dans une position de préparation,
- déplacement de l'appareil de montage (10) dans la direction d'outil (14) en direction du nouvel outil (22) jusqu'à ce que le nouvel outil (22) soit enfiché dans le porte-outil (16).

10. Procédé selon la revendication 9,
**caractérisé en ce que**
le porte-outil (16) est tourné autour d'un axe dans la direction d'outil (14) lors du déplacement de l'appareil de montage (10) dans la direction d'outil (14) en direction du nouvel outil (22).

11. Procédé selon la revendication 8, 9 ou 10,
comportant les étapes supplémentaires de :
- réception de l'ancien outil (22) fixé dans le moyen de préhension (44) avec l'outil de préhension (90),
- libération de l'ancien outil (22) par le moyen de préhension (44) et
- dépôt de l'ancien outil (22) dans un magasin (92).
